# EUROPEAN PATENT APPLICATION

(11) **EP 4 773 259 A2**
(43) Date of publication of application: **08.07.2026**
(21) Application number: 25224253.2
(22) Date of filing: 17.12.2025
(51) Int. Cl.: H01M 8/0223, C22C 38/00, H01M 8/0258

(54) **CAST INTERCONNECTS FOR SOLID OXIDE ELECTROCHEMICAL COLUMNS AND METHODS OF MAKING THE SAME**

(30) Priority: 06.01.2025 US 202563742128 P
(71) Applicant: Bloom Energy Corporation, San Jose, CA 95134 (US)
(72) Inventor: ARMSTRONG, Tad, San Jose, 95134 (US)
(74) Representative: Wichmann, Hendrik

(57) **Abstract**

A method of making an interconnect for an electrochemical cell column includes casting a metal alloy or a metal matrix composite material to form a near-net-shape interconnect part which includes riser openings, a fuel flow field and an air flow field, and forging the near-net-shape interconnect part to form the interconnect.

## Description

### FIELD

The embodiments of the present disclosure are generally directed to solid oxide electrochemical cell column components and more specifically to cast and/or forged interconnects.

### BACKGROUND

Interconnects for a solid oxide fuel cell (SOFC) or solid oxide electrolyzer cell (SOEC) system may be formed by powder metallurgy. A chromium powder containing about 5 weight percent iron is pressed in a powder pressing apparatus to form a green interconnect, followed by sintering the green interconnect to form the chromium alloy interconnect. However, this process is relatively expensive.

### SUMMARY

According to various embodiments of the present disclosure, an interconnect for an electrochemical stack comprises an air side and an opposing fuel side; a fuel flow field located on the fuel side and comprising fuel channels separated by fuel ribs; and an air flow field located on the air side and comprising air channels separated by air ribs, wherein the interconnect comprises a metal matrix composite material.

According to various embodiments, an electrochemical cell column comprises stainless steel interconnects stacked over one another; and anode supported solid oxide electrochemical cells located between the interconnects, wherein a coefficient of thermal expansion (CTE) of the anode supported solid oxide electrochemical cells is within +/- 5% of the CTE of the stainless steel interconnects.

According to various embodiments of the present disclosure, a method of making an interconnect for an electrochemical cell column includes casting a metal alloy or a metal matrix composite material to form a near-net-shape interconnect part which includes riser openings, a fuel flow field and an air flow field, and forging the near-net-shape interconnect part to form the interconnect.

### BRIEF DESCRIPTION OF THE DRAWINGS

The accompanying drawings, which are incorporated herein and constitute part of this specification, illustrate example embodiments of the invention, and together with the general description given above and the detailed description given below, serve to explain the features of the invention.
FIG. 1A is a perspective view of an electrochemical cell column, FIG. 1B is a perspective view of one counter-flow solid oxide electrochemical cell stack included in the column of FIG. 1A, and FIG. 1C is a side cross-sectional view of a portion of the stack of FIG. 1B.
FIG. 2A is a top view of the air side of a counter-flow interconnect of the stack of FIG. 1B, and FIG. 2B is a top view of the fuel side of the interconnect.
FIG. 3A is a perspective view of a cross flow electrochemical cell stack, FIG. 3B is an exploded perspective view of a portion of the stack of FIG. 3A, FIG. 3C is a top view of the fuel side of an interconnect included in the stack of FIG. 3A, and FIG. 3D is a schematic view of an electrochemical cell included in the stack of FIG. 3A.
FIG. 4A is a cross-sectional view of an anode supported electrochemical cell, FIG. 4B is a cross-sectional view of a co-supported electrochemical cell, and FIG. 4C is a cross-sectional view of an electrolyte supported electrochemical cell, according to various embodiments of the present disclosure.
FIGS. 5A-5F illustrate a sand casting process, according to various embodiments of the present disclosure.
FIGS. 6A-6F illustrate an investment casting process, according to various embodiments of the present disclosure.
FIG. 7 illustrates a stir casting process, according to various embodiments of the present disclosure.
FIGS. 8A-8D illustrate a squeeze casting process, according to various embodiments of the present disclosure.
FIG. 9 is a perspective view of an interconnect that may be formed by a casting process of embodiments of the present disclosure.

### DETAILED DESCRIPTION

As set forth herein, various aspects of the disclosure are described with reference to the exemplary embodiments and/or the accompanying drawings in which exemplary embodiments of the invention are illustrated. This invention may, however, be embodied in many different forms and should not be construed as limited to the exemplary embodiments shown in the drawings or described herein. It will be appreciated that the various disclosed embodiments may involve particular features, elements or steps that are described in connection with that particular embodiment. It will also be appreciated that a particular feature, element or step, although described in relation to one particular embodiment, may be interchanged or combined with alternate embodiments in various non-illustrated combinations or permutations.

The various embodiments will be described in detail with reference to the accompanying drawings. Wherever possible, the same reference numbers will be used throughout the drawings to refer to the same or like parts. References made to particular examples and implementations are for illustrative purposes and are not intended to limit the scope of the invention or the claims.

Ranges can be expressed herein as from "about" one particular value, and/or to "about" another particular value. When such a range is expressed, examples include from the one particular value and/or to the other particular value. Similarly, when values are expressed as approximations, by use of the antecedent "about" or "substantially" it will be understood that the particular value forms another aspect. In some embodiments, a value of "about X" may include values of +/- 1% X. It will be further understood that the endpoints of each of the ranges are significant both in relation to the other endpoint, and independently of the other endpoint.

Electrochemical cell systems include fuel cell and electrolyzer cell systems. In a high temperature fuel cell system, such as a solid oxide fuel cell (SOFC) system, an oxidizing flow is directed to the cathode side of the fuel cell while a fuel (e.g., hydrogen, ammonia or hydrocarbon fuel) flow is directed to the anode side of the fuel cell. The oxidizing flow is typically air, while the fuel flow can be hydrogen (H₂) or a hydrocarbon fuel, such as methane, natural gas, ethanol, or methanol, or a hydrogen containing fuel such as ammonia. The fuel cell, operating at a typical temperature between 750°C and 950°C, enables the transport of negatively charged oxygen ions from the cathode flow stream to the anode flow stream, where the ions combine with either free hydrogen or hydrogen in a hydrocarbon molecule to form water vapor and/or with carbon monoxide to form carbon dioxide. The excess electrons from the negatively charged ions are routed back to the cathode side of the fuel cell through an electrical circuit completed between the anode and cathode, resulting in an electrical current flow through the circuit.

In an electrolyzer system, such as a solid oxide electrolyzer system (SOEC), a fuel flow comprising water (e.g., steam) is separated into hydrogen and oxygen by applying a voltage across the electrolyzer cells. In the SOEC stack, the anode is the air electrode and the cathode is the fuel electrode. Thus, the electrode to which the fuel (e.g., hydrogen, ammonia or hydrocarbon fuel in a SOFC, and steam in a SOEC) is supplied may be referred to as the fuel electrode and the opposing electrode may be referred to as the air electrode in both SOFC and SOEC cells.

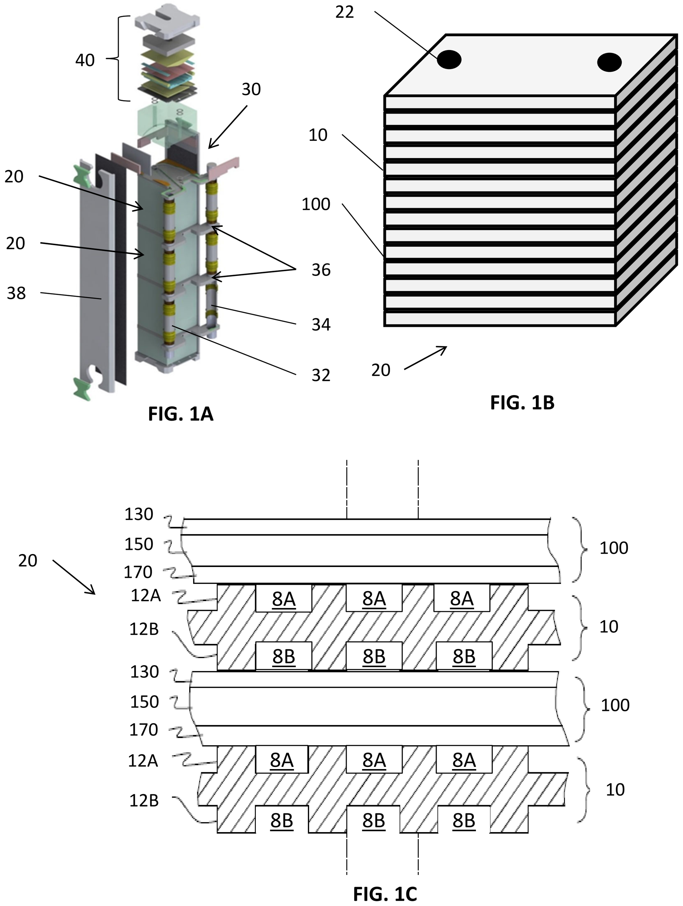

FIG. 1A is a perspective view of an electrochemical cell column 30, FIG. 1B is a perspective view of one counter-flow solid oxide electrochemical cell (e.g., SOFC or SOEC) stack 20 included in the column 30 of FIG. 1A, and FIG. 1C is a side cross-sectional view of a portion of the stack 20 of FIG. 1B.

Referring to FIGS. 1A and 1B, the column 30 may include one or more electrochemical cell stacks 20, a fuel inlet conduit 32, a fuel exhaust conduit 34, and fuel feed/return assemblies 36 (e.g., anode splitter plates (ASPs) 36). The column 30 may also include side baffles 38 and a compression assembly 40. The fuel inlet conduit 32 is fluidly connected to ASPs 36 and is configured to provide the fuel feed to each ASP 36, and fuel exhaust conduit 34 is fluidly connected to ASPs 36 and is configured to receive fuel exhaust from each ASP 36.

The ASPs 36 are disposed between the stacks 20 and are configured to provide a fuel (e.g., hydrogen, ammonia or hydrocarbon fuel or steam) feed to the stacks 20 and to receive fuel exhaust from the SOFC stacks 20 or a hydrogen product stream from the SOEC stacks 20. For example, the ASPs 36 may be fluidly connected to internal fuel holes 22 formed in the stacks 20, as discussed below.

Referring to FIG. 1C, the stack 20 includes multiple electrochemical cells 100 that are separated by interconnects 10, which may also be referred to as gas flow separator plates or bipolar plates. Each electrochemical cell 100 includes an air electrode 130, a solid oxide electrolyte 150, and a fuel electrode 170.

Each interconnect 10 electrically connects adjacent electrochemical cells 100 in the stack 20. In particular, an interconnect 10 may electrically connect the fuel electrode 170 of one electrochemical cell 100 to the air electrode 130 of an adjacent electrochemical cell 100. FIG. 1C shows that the lower electrochemical cell 100 is located between two interconnects 10.

Each interconnect 10 includes fuel ribs 12A that at least partially define fuel channels 8A and air ribs 12B that at least partially define the air channels 8B. The interconnect 10 may operate as a gas-fuel separator that separates a fuel flowing to the fuel electrode 170 of one cell in the stack from oxidant, such as air, flowing to the air electrode 130 of an adjacent cell in the stack. At either end of the stack 20, there may be an air end plate or fuel end plate (not shown) for providing air or fuel, respectively, to the end electrode in the stack. Alternatively, the same interconnect 10 may be used as an air end plate or fuel end plate.

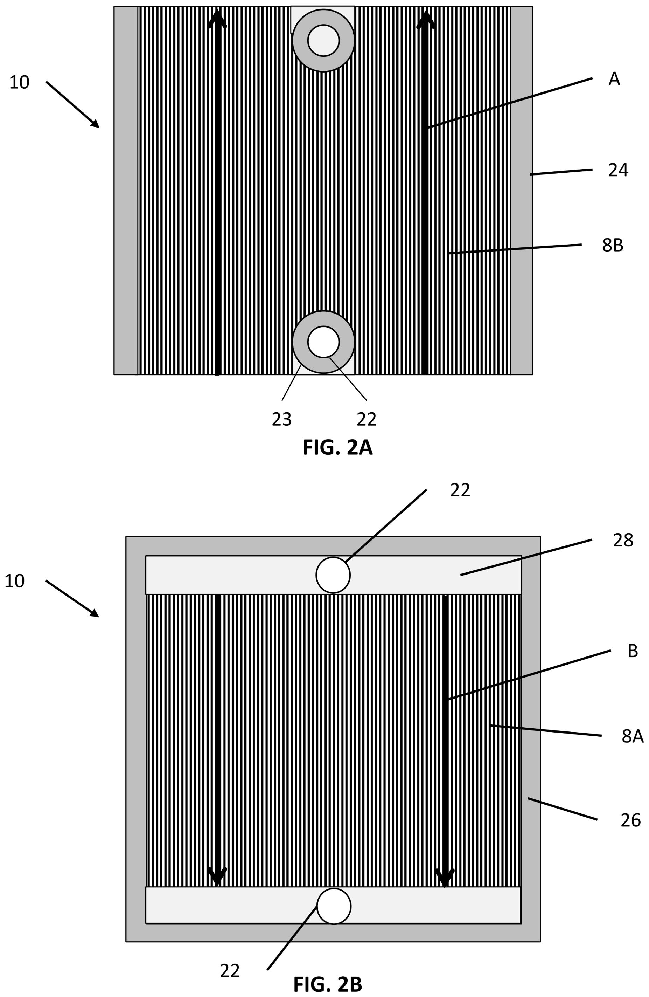

FIG. 2A is a top view of the air side of a counter-flow (or co-flow) interconnect 10, and FIG. 2B is a top view of a fuel side of the interconnect 10. Referring to FIGS. 1C and 2A, the air side includes the air channels 8B. Air flows through the air channels 8B to an air electrode 130 of an adjacent electrochemical cell 100. In particular, the air may flow across the interconnect 10 in a first direction A as indicated by the arrows.

Ring seals 23 may surround the fuel holes 22 of the interconnect 10, to prevent a fuel, such as a fuel or steam, from contacting the air electrode 130. Peripheral strip-shaped seals 24 are located on peripheral portions of the air side of the interconnect 10. The seals 23, 24 may be formed of a glass material. The peripheral portions may be in the form of an elevated plateau which does not include ribs or channels. The surface of the peripheral regions may be coplanar with tops of the air ribs 12B.

Referring to FIGS. 1C and 2B, the fuel side of the interconnect 10 may include the fuel channels 8A and fuel manifolds 28 (e.g., fuel plenums). A fuel such as a fuel or steam flows from one of the fuel holes 22, into the adjacent manifold 28, through the fuel channels 8A, and to a fuel electrode 170 of an adjacent electrochemical cell 100. Excess fuel may flow into the other fuel manifold 28 and then into the adjacent fuel hole 22. In particular, the fuel may flow across the interconnect 10 in a second direction B, as indicated by the arrows. The second direction B may be opposite to the first direction A (see FIG. 2A) referred to as a counter-flow design, or in the same direction as first direction A referred to as co-flow design.

A frame-shaped seal 26 is disposed on a peripheral region of the fuel side of the interconnect 10. The peripheral region may be an elevated plateau which does not include ribs or channels. The surface of the peripheral region may be coplanar with tops of the fuel ribs 12A.

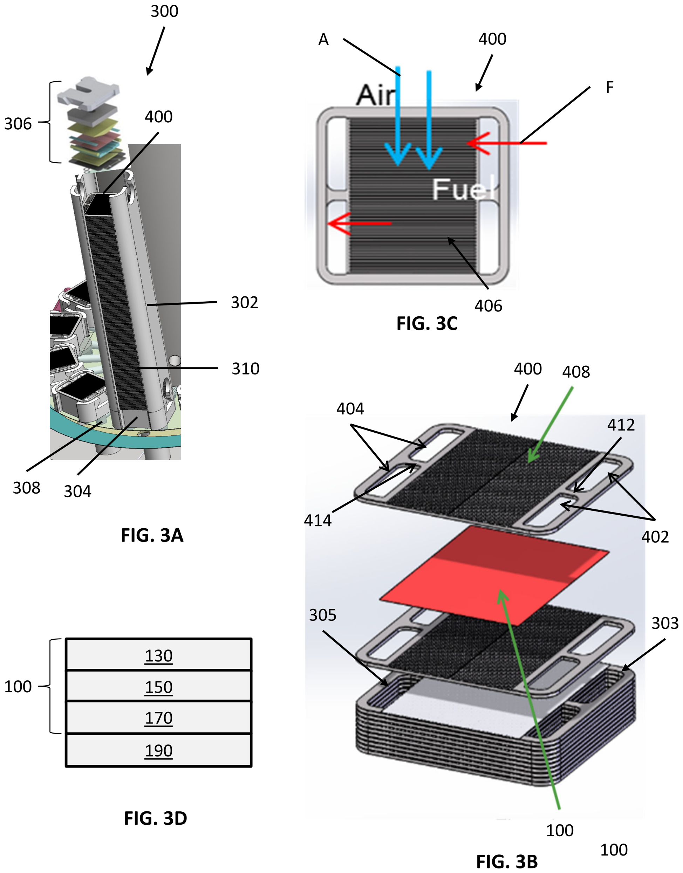

FIG. 3A is a perspective view of an internally manifolded cross-flow electrochemical cell column 300, according to various embodiments of the present disclosure, FIG. 3B is an exploded perspective view of a portion of the column 300 of FIG. 3A, FIG. 3C is a top view of the fuel side of an interconnect 400 included in the column 300, and FIG. 3D is a schematic view of an electrochemical cell included in the column 300.

Referring to FIGS. 3A-3D, the cell column 300, which may also be referred to as an electrochemical cell stack because it lacks ASPs, includes multiple electrochemical cells 100 (e.g., fuel cells or electrolyzer cells) that are separated by interconnects 400, which may also be referred to as gas flow separator plates or bipolar plates. One or more columns 300 may be thermally integrated with other components of an electrochemical cell system (e.g., one or more anode tail gas oxidizers, fuel reformers, fluid conduits and manifolds, etc. of a SOFC or SOEC system) in a common enclosure or "hotbox."

Each electrochemical cell 100 may include a solid oxide electrolyte 150, a fuel electrode 170, and an air electrode 130. In some embodiments, the fuel electrode 170 and the air electrode 130 may be printed on the electrolyte 150. In other embodiments, a conductive layer 190, such as a nickel mesh, may be disposed between the fuel electrode 170 and an adjacent interconnect 400. The electrochemical cell 100 does not include through holes, such as the fuel holes, described above.

The interconnects 400 are made from an electrically conductive metal alloy. An upper most interconnect 400 and a lowermost interconnect 400 of the column 300 may be different ones of an air end plate or fuel end plate including features for providing air or fuel, respectively, to an adjacent end electrochemical cell 100 in the stack 300. As used herein, an "interconnect" may refer to either an interconnect located between two electrochemical cells 100 or an end plate located at an end of the stack and directly adjacent to only one electrochemical cell 100. Since the column 300 does not include ASPs and the end plates associated therewith, the column 300 may include only two end plates.

The column 300 may include side baffles 302, a fuel plenum 304, and a compression assembly 306. The side baffles 302 may be formed of a ceramic material and may be disposed on opposing sides of the cell column 300 containing stacked electrochemical cells 100 and interconnects 400. The side baffles 302 may connect the fuel plenum 304 and the compression assembly 306, such that the compression assembly 306 may apply pressure to the column 300. The side baffles 302 may be curved baffle plates, such that each baffle plate covers at least portions of three sides of the cell column 300. For example, one baffle plate may fully cover the fuel inlet riser side of the column 300 and partially cover the adjacent front and back sides of the stack, while the other baffle plate fully may cover the fuel outlet riser side of the stack and partially cover the adjacent portions of the front and back sides of the stack. The remaining uncovered portions for the front and back sides of the stack allow air to flow through the column 300. The fuel plenum 304 may be disposed below the column 300 and may be configured to provide a hydrogen-containing fuel feed to the column 300 (or a steam feed for an SOEC system) and may receive a fuel exhaust from the column 300 (or a hydrogen product stream for an SOEC system). The fuel plenum 304 may be connected to fuel inlet and outlet conduits 308 which are located below the fuel plenum 304.

Each interconnect 400 electrically connects adjacent electrochemical cells 100 in the column 300. In particular, an interconnect 400 may electrically connect the fuel electrode 170 of one electrochemical cell 100 to the air electrode 130 of an adjacent electrochemical cell 100. As shown in FIG. 3C, each interconnect 400 may be configured to channel air in a first direction A, such that the air may be provided to the air electrode 130 of an adjacent electrochemical cell 100. Each interconnect 400 may also be configured to channel fuel in a second direction F, such that the fuel may be provided to the fuel electrode 170 of an adjacent electrochemical cell 100. Directions A and F may be perpendicular, or substantially perpendicular. As such, the interconnects 400 may be referred to as cross-flow interconnects.

The interconnect 400 may include through-holes configured for fuel distribution. For example, the interconnects 400 may include one or more fuel inlets 402 and one or more fuel outlets 404, which may also be referred to as fuel exhaust outlets 404. The fuel inlets and outlets 402, 404 may be disposed outside of the perimeter of the electrochemical cells 100. As such, the electrochemical cells 100 may be formed without corresponding through holes for fuel flow. The combined length of the fuel inlets 402 and/or the combined length of the fuel outlets 404 may be at least 75% of a corresponding length of the interconnect 400 e.g., a length taken in direction A.

In one embodiment, each interconnect 400 contains two fuel inlets 402 separated by a neck portion 412 of the interconnect 400, as shown in FIG. 3B. However, more than two fuel inlets 402 may be included, such as three to five inlets separated by two to four neck portions. In one embodiment, each interconnect 400 contains two fuel outlets 404 separated by a neck portion 414 of the interconnect 400, as shown in FIG. 3B. However, three or more fuel outlets 404 may be included, such as three to five outlets separated by two to four neck portions 414. Although not illustrated, the number of fuel inlets and fuel outlets can be different. The fuel inlets 402 and outlets 404 may be fluidly connected by fuel channels 406 that extend on the fuel side of the interconnect 400. Air channels 408 may be disposed on an opposing air side of the interconnect 400.

The fuel inlets 402 of adjacent interconnects 400 may be aligned in the column 300 to form one or more fuel inlet risers 303. The fuel outlets 404 of adjacent interconnects 400 may be aligned in the column 300 to form one or more fuel outlet risers 305. The fuel inlet risers 303 may be configured to distribute fuel received from the fuel plenum 304 to the electrochemical cells 100. The fuel outlet risers 305 may be configured to provide fuel exhaust received from the electrochemical cells 100 to the fuel plenum 304.

The side baffles 302 may optionally be curved around edges of the interconnects 400. In particular, the side baffles 302 may be disposed around the fuel inlets 402 and outlets 404 of the interconnects 400. Accordingly, the side baffles may more efficiently control air flow through air channels of the interconnects 400, which are exposed between the side baffles 302. In various embodiments, the column 300 may include from about 200 to 400 electrochemical cells, such as about 250 to 350 electrochemical cells, more particularly from about 275 to 325 electrochemical cells, which may be provided with fuel using only the fuel risers 303, 305.

Each interconnect 400 may be made of or may contain electrically conductive material, such as a metal alloy which has a similar coefficient of thermal expansion to that of the solid oxide electrolyte in the cells (e.g., a difference of 0-10%). The interconnects 400 may electrically connect the fuel electrode 170 of one electrochemical cell 100 to the air electrode 130 of an adjacent electrochemical cell 100 in column 300. An electrically conductive contact layer, such as a nickel contact layer 190 (e.g., a nickel mesh), may be provided between fuel electrode 170 and each interconnect 400. Another optional electrically conductive contact layer may be provided between the air electrodes and each interconnect 400.

An air surface of an interconnect 400 that in operation is exposed to an oxidizing environment (e.g., air), may be coated with a protective coating layer in order to decrease the growth rate of a chromium oxide surface layer on the interconnect and to suppress evaporation of chromium vapor species which can poison the electrochemical cell air electrode. Typically, the coating layer, which can comprise a perovskite such as lanthanum strontium manganite (LSM), may be formed using a spray coating or dip coating process. Alternatively, other metal oxide coatings, such as a spinel, such as an (Mn, Co)₃O₄ spinel (MCO), can be used instead of or in addition to LSM. Any spinel having the composition Mn₂₋ₓCo₁₊ₓO₄ (0 ≤ x ≤ 1) or written as z(Mn₃O₄) + (1-z)(Co₃O₄), where (1/3 ≤ z ≤ 2/3) or written as (Mn, Co)₃O₄ may be used. In other embodiments, a mixed layer of LSM and MCO, or a stack of LSM and MCO layers may be used as the coating layer.

Electrochemical cells, such as SOFCs and SOECs, are typically supported in order to increase mechanical stability and reliability. For example, solid oxide electrochemical cells include electrode-supported cells, electrolyte-supported cells, and co-supported cells. Electrolyte-supported cells include a relatively thick electrolyte upon which relatively thin electrodes are formed. Electrode supported cells include a relatively thick supporting electrode (e.g., fuel electrode, such as the anode for SOFCs) to provide structural support, and co-supported cells may include a relatively thick supporting electrode and a relatively thick electrolyte.

Electrode-supported SOFCs and SOECs may be formed by co-sintering a support electrode material and a coating of electrolyte material. Electrode-supported cells include anode-supported cells having a relatively thick anode and cathode-supported cells having a relatively thick cathode. As used herein, anode-supported cells refer to fuel-electrode supported SOFCs and SOECs (even though the fuel electrode functions as a cathode electrode in a SOEC) due to common naming convention in the art.

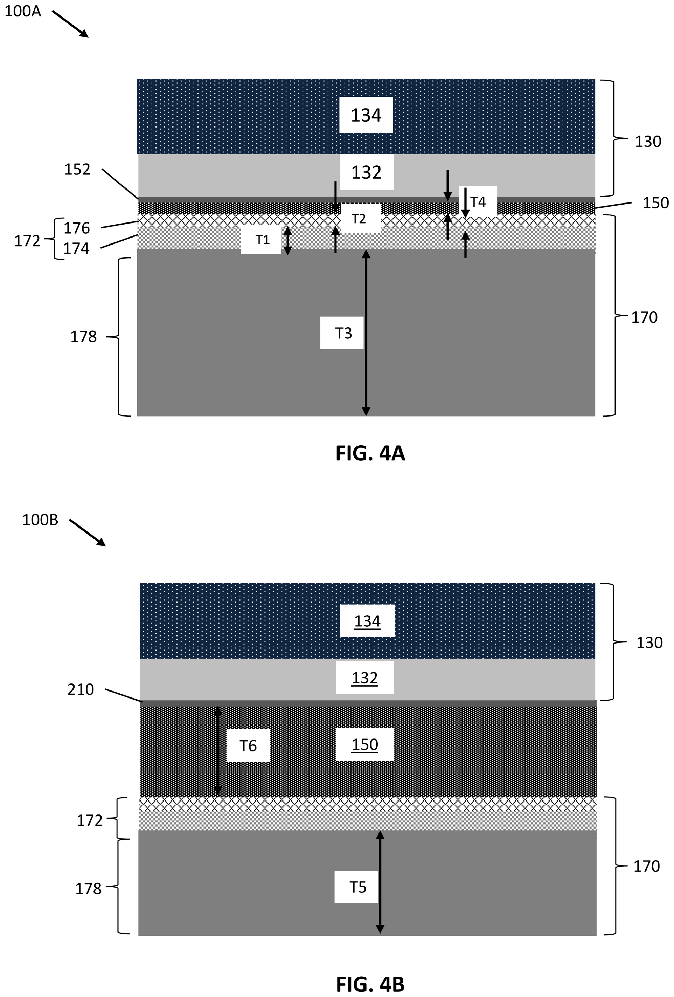

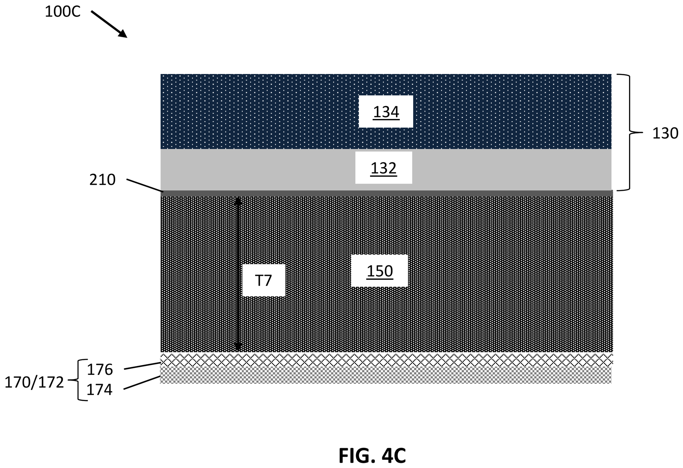

FIG. 4A is a cross-sectional view of an anode supported electrochemical cell 100A, FIG. 4B is a cross-sectional view of a co-supported electrochemical cell 100B, and FIG. 4C is a cross-sectional view of an electrolyte supported electrochemical cell 100C, according to various embodiments of the present disclosure. Referring to FIGS. 4A-4C, the electrochemical cells 100A, 100B, 100C may comprise SOFCs which include an electrolyte 150, an anode (i.e., fuel electrode) 170 disposed on a first side (e.g., anode or fuel side) of the electrolyte 150, and a cathode electrode (i.e., air electrode) 130 disposed on a second side (e.g., cathode or air side) of the electrolyte 150. In SOECs, the fuel electrode 170 is the cathode and the air electrode 130 is the anode. The electrolyte 150 may be formed of an ionically conductive ceramic material, such as a doped zirconia material or a doped ceria material. For example, the electrolyte 150 may include scandia stabilized zirconia (SSZ), yttria stabilized zirconia (YSZ), yttria-ceria-stabilized zirconia (YCSZ), ytterbia-ceria-scandia-stabilized zirconia (YbCSSZ), or blends thereof.

Preferably, the electrolyte may include YbCSSZ, wherein scandia may be present in an amount equal to 9 to 11 mol %, such as 10 mol %, ceria may present in amount greater than 0 and equal to or less than 3 mol %, for example 0.5 mol % to 2.5 mol %, such as 1 mol %, and ytterbia may be present in an amount greater than 0 and equal to or less than 2.5 mol %, for example 0.5 mol % to 2 mol %, such as 1 mol %, as disclosed in U.S. Pat. No. 8,580,456, which is incorporated herein by reference.

The electrolyte 150 may optionally include a barrier layer 152 disposed on the cathode side. The barrier layer 152 may be configured to prevent diffusion of cathode materials into the electrolyte 150. The barrier layer 152 may comprise yttria stabilized zirconia or scandia and yttria stabilized zirconia.

The cathode electrode 130 may be disposed on the barrier layer 152. The cathode electrode 130 may be a single or multi-layer structure. For example, the cathode electrode 130 may include a cathode functional layer 132 and a cathode contact layer 134. The cathode functional layer 132 may include a cathode catalyst, such as lanthanum strontium manganate, lanthanum strontium cobaltite, lanthanum strontium cobalt ferrite or lanthanum nickel ferrite. The cathode contact layer 134 may include an electrically conductive material, such as lanthanum strontium manganate configured to reduce electrical resistance between the cathode electrode 130 and an adjacent component, such as an interconnect.

The anode 170 may include an anode electrode 172 disposed on the anode side of the electrolyte 150 and an anode support 178 disposed on the anode electrode 172. The anode electrode 172 may include a nickel containing phase and an ionically conductive ceramic phase, such as SSZ, YSZ, YbCSSZ, or a doped ceria such as gadolinia, yttria and/or samaria doped ceria (SDC). Preferably, the anode electrode 172 comprises a Ni-SDC cermet or a Ni-YbCSSZ cermet.

The anode electrode 172 may be a single or multi-layer structure. For example, the anode electrode 172 may include a first functionally graded anode (FGA) layer 174 and a second FGA layer 176. The first FGA layer 174 may include a lower ratio of the nickel containing phase to the ionically conductive phase than the second FGA layer 176.

The first FGA layer 174 may have a thickness T1 ranging from about 7 µm to about 17 µm, such as from about 10 µm to about 14 µm, or from about 11 µm to about 13 µm. The second FGA layer 176 may have a thickness T2 ranging from about 2 µm to about 10 µm, such as from about 4 µm to about 8 µm, or from about 5 µm to about 6 µm. However, the present disclosure is not limited to any particular FGA layer thicknesses.

The anode support 178 may be formed of a cermet material having a metal phase and a ceramic phase. For example, the anode support 178 may include a nickel-containing phase (e.g., nickel phase) and a ceramic phase. The nickel phase may include nickel and/or nickel alloys and may optionally include other additional metal dopants to improve phase stability and/or redox tolerance, as discussed in detail below.

The ceramic phase may comprise a stabilized zirconia, yttria stabilized zirconia (YSZ), scandia stabilized zirconia (SSZ), yttria-scandia stabilized zirconia (YSSZ), and/or a doped ceria material, such as gadolinia, yttria and/or samaria doped ceria. The ceramic phase may be optionally doped with additional phase stabilizers, as discussed in detail below. Preferably, the ceramic phase of the anode support 178 comprises YSZ comprising from about 4 mol% to about 10 mol% yttria (4-10)-YSZ. The ceramic phase (e.g., the (4-10)-YSZ) may include additional dopants (e.g., phase stabilizers) to improve phase stability.

As shown in FIG. 4A, in the anode supported electrochemical cell 100A, the anode support 178 may have a thickness T3 ranging from about 50 µm to about 400 µm, such as from about 75 µm to about 300 µm, or from about 100 µm to about 150 µm. The electrolyte 150 may have a thickness T4 ranging from about 5 µm to about 15 µm, such as from about 8 µm to about 12 µm, or from about 10 µm. Accordingly, the relatively thick anode support 178 may support the relatively thin electrolyte 150.

As shown in FIG. 4B, the co-supported electrochemical cell 100B may include a relatively thin anode support 178 and a relatively thick electrolyte 150. In particular, the anode support 178 may have a thickness T5 ranging from about 20 µm to about 100 µm, such as from about 25 µm to about 75 µm, or from about 40 µm to about 60 µm. The electrolyte 150 may have a thickness T6 ranging from about 20 µm to about 80 µm, such as from about 30 µm to about 70 µm, from about 40 µm to about 60 µm, or about 50 µm. The relatively thick electrolyte 150 may be self-supporting. As such, the thickness of the anode support 178 may be reduced, as compared to the anode support 178 of the cell 100B, without compromising cell strength.

As shown in FIG. 4C, the electrolyte 150 may be the thickest layer of the electrolyte supported cell 100C. For example, the electrolyte 150 may have a thickness T7 ranging from about 50 µm to about 400 µm, such as from about 75 µm to about 300 µm, or from about 100 µm to about 150 µm. The anode 170 may not include a support 178, such that the anode electrode 172 may be unsupported.

Referring to FIGS. 4A-4C, the coefficient of thermal expansion (CTE) of each cell 100A-100C may be determined primarily by the CTE of the thickest layer thereof. In other words, other thinner layers of the cell 100A-100C may not significantly contribute to the overall CTE of the cell 100A-100C. For example, the CTE of anode supported cell 100A may be determined by the CTE of the anode 170 (e.g., the anode support 178), the CTE of the co-supported cell 100B may be determined by the CTE of the electrolyte 150 and the CTE of the anode 170, and the CTE of the electrolyte supported cell 100C may be determined by the CTE of the electrolyte 150. Thus, the anode supported cells 100A may have a different CTE than the electrolyte supported cells 100C.

Solid oxide electrochemical columns may have operating temperatures of 700 °C of more. The CTE of an interconnect should be closely matched to the CTE of electrochemical cells in the same stack in order to limit the accumulation of thermal stress during column thermal cycling. In particular, excess thermal stress may result in column damage, such as cell damage and/or cracking.

For electrolyte supported cells 100C, the interconnects may be formed of a chromium-iron alloy which includes 5 weight percent iron and balance chromium. This alloy has a good CTE match to the electrolyte supported solid oxide electrochemical cells 100C. However, interconnects made from the chromium-alloy alloy are typically formed by an expensive powder metallurgy process, which increases the cost of manufacturing the solid oxide electrochemical cell columns.

According to various embodiments of the present disclosure, methods and materials are provided that may be used to form interconnects at a lower cost while still providing a close CTE match to the CTE of the solid oxide electrochemical cells. In some embodiments, interconnects may be formed of metal alloy or metal-ceramic composite (i.e., metal matrix composite) interconnect materials that have a CTE that closely matches the CTE of the solid oxide electrochemical cells used in the same column. For example, interconnects for anode-supported cells 100A may have a CTE that is within +/- 5% (e.g., +/- 1%) of the CTE of the cell anodes (e.g., fuel electrodes), interconnects for co-supported cells 100B may have a CTE that is within +/- 5% (e.g., +/- 1%) of the CTE of the average of the cell electrolyte CTE and the cell anode CTE, and interconnects for electrolyte supported cells 100C may have a CTE that is within +/- 5% (e.g., +/- 1%) of the CTE of the cell electrolyte.

In various embodiments, electrolyte supported solid oxide electrochemical cells 100C may have a CTE ranging from about 9.58 to 9.62 ppm/°C. However, common high temperature alloys may have significantly higher CTE values than that of the cells 100C. For example, Ni-based alloys may have CTEs ranging from about 15 to about 17ppm/°C, and ferritic stainless steels may have CTEs ranging from about 10 to about 12ppm/°C. As such, interconnects formed of such alloys may generate significant thermal stress in the electrolyte supported solid oxide electrochemical cells 100C.

In a first embodiment, interconnects are formed of metal-ceramic composite interconnect materials having CTEs that are closely matched to the CTEs of electrolyte supported solid oxide electrochemical cells 100C. The composite interconnect materials may include a metal matrix in which a ceramic dispersed phase material is dispersed in the metal matrix material. The ceramic dispersed phase may be in the form of ceramic particles and/or fibers. The matrix material may include any suitable metal or metal alloy, such as a ferritic stainless steel, a tool steel, a martensitic steel, a high chrome steel, or cast iron. Suitable steels include SS430, SS440, SS441, and SS446 stainless steels which may have a CTE ranging from about 10 to about 12 ppm/°C, such as about 10.5ppm/°C.

SS430 may include, by weight percent, <0.12% C, 16-18% Cr, <0.75% Ni, <1.0% Mn, <1.0% Si, <0.040% P, <0.030% S, and a balance of Fe. SS440 may include, by weight percent, 0.6-1.2% C, 0-1% Mn, 0-1% Si, 0-0.04% P, 0-0.04% S, 16-18% Cr, 0-0.75% Mo, and a balance of Fe. SS441 may include, by weight percent, 17.50-18.50 Cr, < 0.6% Ti and Nb, < 0.02% C, and a balance of Fe. SS446 may include, by weight percent, 23.0-27.0% Cr, 1.50% Mn, 1.0% Si, 0.25% Ni, 0.20% C, 0.040% P, 0.030% S, and a balance of Fe.

Other elements may optionally be added to the above steels and/or cast iron alloys to enhance particular properties thereof. For instance, the addition of Mn and/or Co may decrease the resistance of the native metal oxide that forms on the surface of the interconnect during operation of the column and suppress the evaporation of Cr from an interconnect. Thus, the stainless steels may include by weight percent, 0.01-1.2% C, 16-27% Cr, 0-1.5% (e.g., 0.5 to 1.5%) Mn, 0-1% (e.g., 0.5 - 1%) Si, 0 to less than 1% (e.g., 0.25 - 0.75%) of at least one of Ni, Mo, Co, Ti and/or Nb, and less than 0.05% each of P and S, and a balance of Fe.

The ceramic dispersed phase material may include any suitable ceramic material that has a CTE that is different than the CTE of the metal matrix material. The ceramic material may be in the form of a dispersed phase, such as ceramic particles and/or fibers dispersed in the metal alloy matrix. Suitable ceramic materials may include alumina (Al₂O₃) or carbides, such as tungsten carbide (WC) with or without Ni and/or Co binders (CTE ~6.5ppm/°C), titanium carbide (TiC) with or without a Ni binder (CTE ~7.0ppm/°C), and silicon carbide (SiC).

In one embodiment, the CTE value of the solid oxide electrochemical cell is between the CTE value of the metal matrix and the CTE value of the ceramic dispersed phase material. For example, the CTE value of the solid oxide electrochemical cell is less than the CTE value of the metal matrix and greater than the CTE value of the ceramic dispersed phase material. Thus, the metal matrix composite material having a relatively high metal matrix CTE value and a relatively low ceramic dispersed phase CTE value may have an average composite material CTE value that is within 5% of the cell CTE value.

The CTE of the composite interconnect material may depend on a volume ratio of the metal matrix to the ceramic fibers/particles (and the Young's Moduli of the constituents). The amounts of the matrix and ceramic materials in the composite interconnect material may be adjusted to provide a CTE that matches the CTE of electrochemical cells in the column. For example, in some embodiments, the metal matrix composite interconnect material may include from about 55-85 vol%, such as from about 60-80 vol%, or from about 65-75 vol% of the metal matrix material, and from about 15-45 vol%, such as from about 20-40 vol%, or from about 25-35 vol% of the ceramic dispersed phase material, where "vol%" means volume percent.

In some embodiments, suitable composite metal-ceramic interconnect materials include: a SS446 matrix containing an Al₂O₃ ceramic dispersed phase material; a SS446 matrix containing a WC-Ni and/or WC-Co ceramic dispersed phase material; a SS446 matrix containing a TiC-Ni and/or TiC ceramic dispersed phase material; a SS446 matrix containing a TiC-WC-Ni ceramic dispersed phase material; or a SS446 matrix material containing a WC ceramic dispersed phase material that lacks a binder. For example, a composite interconnect material that includes 65-85 vol% SS446 and 15-35 vol% Al₂O₃, such as 70 vol% SS446 and 30 vol% Al₂O₃ and has a CTE of approximately 9.6ppm/°C, which is the same as or within 1% of the CTE of a solid oxide electrolyte of the electrolyte supported cell 100C. In one embodiment, the interconnect CTE may range from 9.5 to 9.7 ppm/°C.

In a second embodiment, anode supported solid oxide electrochemical cells may have a CTE ranging from about 10 to about 12 ppm/°C, such as about 10.5 ppm/°C. As noted above, stainless steels, such as SS430, SS440, SS441, and SS446, may have similar CTE values. Therefore, such stainless steels may be suitable for forming interconnects that are used in columns containing anode supported solid oxide electrochemical cells. In one aspect of the second embodiment, the interconnect material may include only the stainless steel without including the ceramic dispersed phase material.

Interconnects that comprise steel or cast iron as a primary component (e.g., the metal-ceramic composite material of the first embodiment or the steel of the second embodiment) may be formed using less expensive method than powder metallurgy. For example, the interconnects may be formed by any suitable casting process, which is less expensive than powder metallurgy processes. Optionally, the cast interconnect may be further processed by forging. For example, the interconnect may be cast into a near-net-shape part containing various features, such as the riser openings and the air and fuel flow fields including the respective ribs, channels and/or plenums. The near-net-shape cast interconnect may then be hot and/or cold forged to provide a more precise shape (e.g., improved dimensional tolerances) for the ribs and channels and/or to reduce or eliminate the cast interconnect camber. For example, the forging may be used to fine tune the cross sectional area of the air and/or fuel channels in the interconnect.

Accordingly, in various embodiments, interconnects may comprise the above described composite or steel materials using, for example:
1) sand casting of the near-net-shape interconnect with final hot forging for dimensional control;
2) investment casting of the near-net-shape interconnect with a final hot forging for dimensional control;
3) stir casting to form a composite material billet followed by hot forging;
4) die casting of the near-net-shape interconnect with a final hot forging for dimensional control; and
5) squeeze casting to interconnect shape to obtain dimensional control.

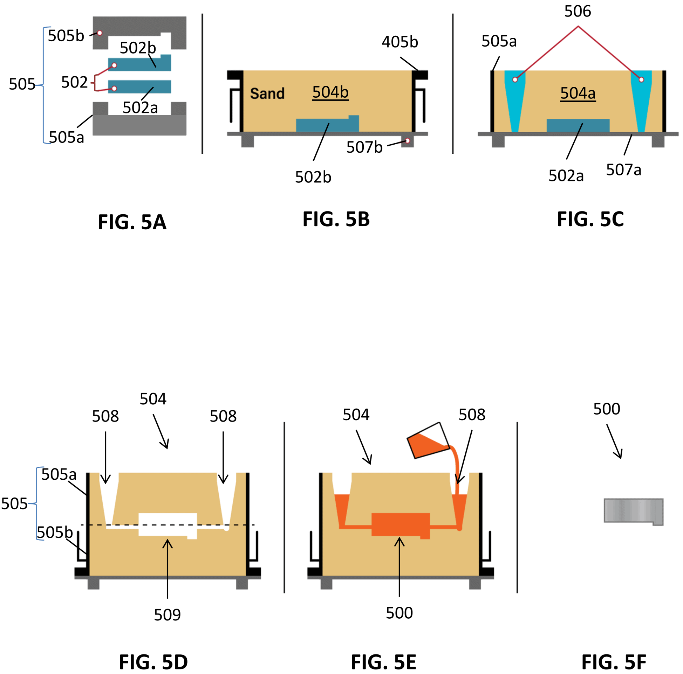

FIGS. 5A-5F illustrate a sand casting process, according to various embodiments of the present disclosure. Referring to FIG. 5A, the first step of the sand casting process involves creating a pattern 502 that is a replica of an interconnect. The pattern 502 may be formed of any suitable material, such as plastic or metal. The pattern 502 is typically larger than the final interconnect to accommodate for shrinkage during cooling. The pattern 502 may include an upper pattern 502a and a lower pattern 502b. The upper pattern 502a may correspond to the air or fuel side of the interconnect, while the lower pattern 502b may correspond to the other one of the air or fuel side of the interconnect. Casting sand is filled in each part 505a and 505b of a two part molding box 505 which is known as a casting flask or core box.

As shown in FIGS. 5B and 5C, the upper pattern 502a and the lower pattern 502b are embedded in sand to create half molds 504a, 504b, which may be referred to as a cope 504a and a drag 504b. Molding tools and techniques, such as ramming, squeezing, or jolting, may be employed to achieve proper sand compaction and mold density. Pins 506 may be inserted into the cope 504a to form openings/channels. Top molding board 507a and bottom molding board 507b may be used for embedding the upper pattern 502a and the lower pattern 502b in the cope 504a and the drag 504b, respectively.

The upper and lower patterns 502a, 502b, the pins 506 and the molding boards 507a, 507b are then removed from the casting sand (i.e., from the cope and the drag). The cope 504a and the drag 504b may then be assembled to form a complete mold 504 in the flask 505 including a cavity 509 and channels 508. As shown in FIG. 5D, the cope 504a is placed on the drag 504b by flipping the upper part 505a of the flask 505 onto the lower part 505b of the flask 505.

As shown in FIG. 5E, molten metal (e.g., molten interconnect alloy or composite interconnect material) is poured into one of the channels (e.g., a runner channel) 508. The molten metal flows into the cavity 509 and rises in the other one of the channels (e.g., a riser channel) 508. The metal is typically heated in a furnace and then transferred to a pouring ladle for controlled pouring into the mold 504.

After the molten metal is poured, it cools and solidifies within the mold 504. The cooling time may be controlled to produce an interconnect having desired properties and dimensional accuracy. After cooling, the mold 504 undergoes a shakeout process that involves mechanically or manually breaking the mold 504 to release an interconnect 500, as shown in FIG. 5F. This process may include removal of excess metal, which may be referred to as the casting's "gating system" (i.e., the metal portions which fill the channels 508). The interconnect 500 may undergo further processing, as discussed below.

In an alternative embodiment, a shell-mold casting method (also known as shell molding) is used instead of sand casting. Shell-mold casting is similar to sand casting. However, the shell-mold casting uses a resin covered sand instead of sand to form the half molds. The half molds in shell-mold casting comprise thin-walled shells created by applying a sand-resin mixture around the upper and lower patterns.

In another alternative embodiment, an open mold casting method is used instead of sand casting. In the open mold casting method, the cavity in the half mold is open at the top, and the molten metal is poured into the cavity in the half mold without using a sprue or riser channels.

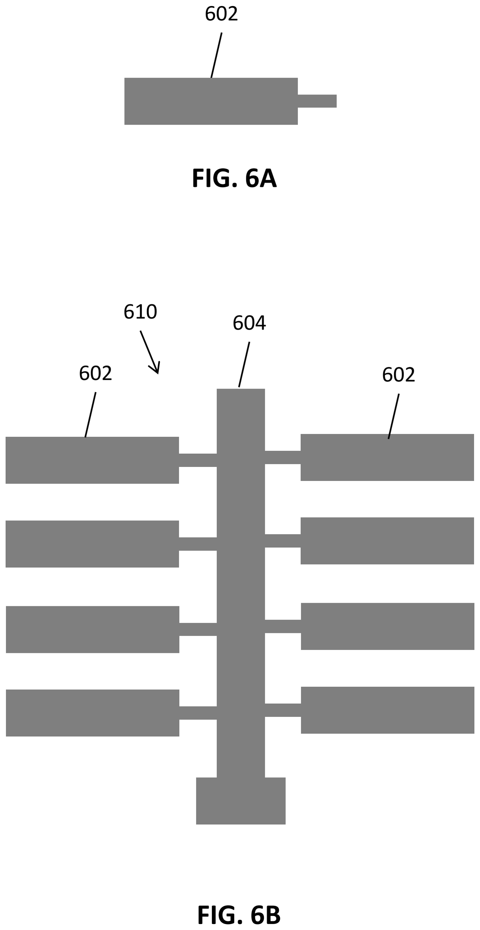

FIGS. 6A-6F illustrate an investment casting process (also known as a lost wax or precision investment casting process), according to various embodiments of the present disclosure. Referring to FIG. 6A, the first step of the investment casting process involves creating a wax pattern 602 that is a replica of an interconnect. The wax pattern 602 may be made of wax or another low melting point material, such as frozen mercury or plastic. The wax pattern 602 may be formed in a master mold, which is also known as a master die.

Referring to FIG. 6B, multiple wax patterns 602 may be attached to a wax sprue 604 to form a wax assembly 610.

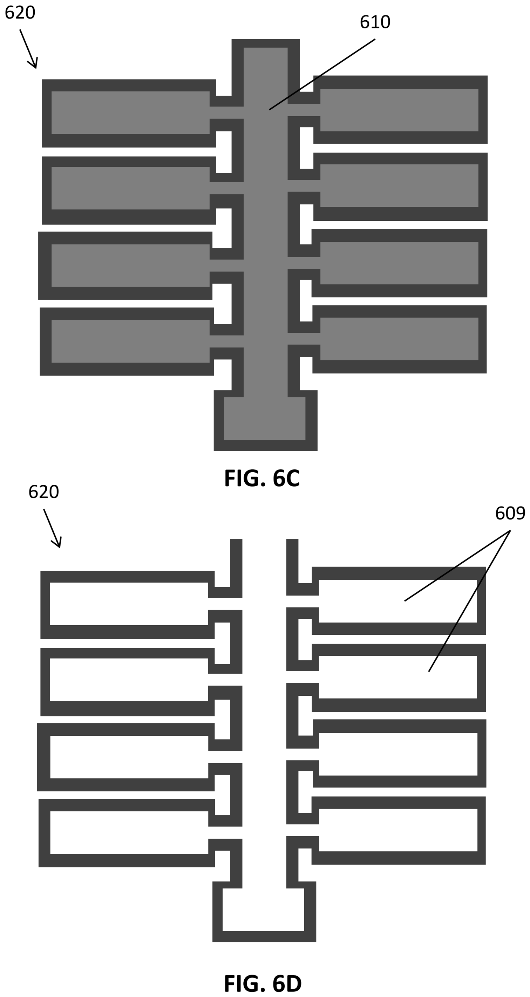

As shown in FIG. 6C, the wax assembly 610 may be coated with a refractory slurry (i.e., the investment material, such as a glass or ceramic material). In particular, the wax assembly 610 may be dipped in the refractory slurry. Optionally, coarser particles of the investment material may be stuccoed onto the wax assembly 610 using a fluidized bed or a rainfall sander. The investment material (e.g., refractory slurry) may be allowed to harden by letting it set (i.e., by curing and drying it) at a relatively low temperature, such as a room temperature to form a mold 620. The mold 620 comprises a refractory material, such as a glass (e.g., fused silica glass) or a ceramic (e.g., zircon, alumina or aluminum silicate).

As shown in FIG. 6D, the solid mold 620 is then dewaxed by heating it to melt and remove the wax assembly 610. Cavities 609 are formed in the mold 620 in spaces that were previously occupied by the wax assembly. The mold may be subjected to a burnout preheating at between 870 and 1100 °C to remove any moisture and residual wax.

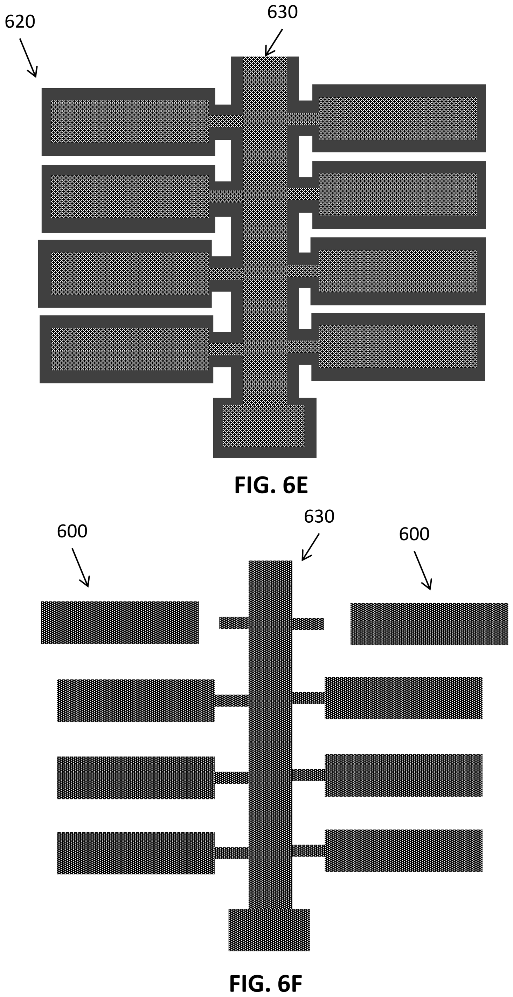

Referring to FIG. 6E, a molten metal (e.g., molten interconnect alloy or composite interconnect material) is poured into the cavities 609 of the mold 620 and then cooled. The solidified metal forms a molding 630.

As shown in FIG. 6F, the mold 620 may be broken and removed from the molding 630. The molding 630 may then be cut to separate interconnects 600. The interconnects 600 may be further processed to remove any remaining molding material.

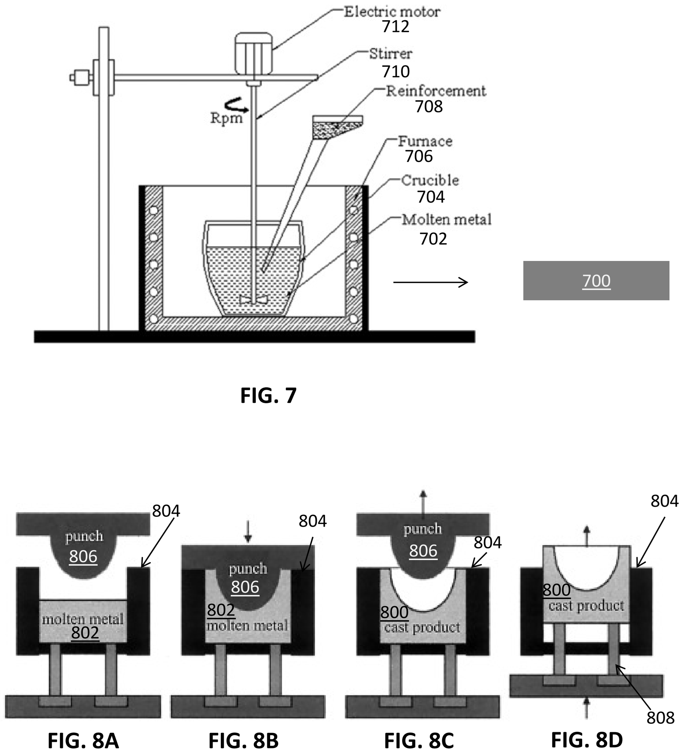

FIG. 7 illustrates a stir casting process, according to various embodiments of the present disclosure. Referring to FIG. 7, stir casting may be used for production of metal matrix composites at a relatively low cost. Molten metal 702 is heated in a crucible 704 disposed in a furnace 706. The molten metal 702 may be a metal matrix material, such as a steel or cast iron described above. Ceramic reinforcement (e.g., dispersed phase particles and/or fibers) material 708 is introduced into the molten metal 702 by mechanical stirring using a stirrer 710 powered by a motor 712. In some embodiments, the ceramic reinforcement material may be injected into the molten metal with the aid of an inert gas to improve its distribution. The molten metal 702 containing the ceramic reinforcement material 708 may be transferred to mold cavity and cooled to form a cast part 700. For example, the cast part 700 may be formed using sand casting, investment casting, punch casting, or the like.

In various embodiments, the cast interconnects 500, 600, 700 formed by the above methods may comprise near-net-shape parts which are forged (e.g., hot and/or cold forged) to form the completed interconnects. In particular, the hot forging may include shaping the cast interconnects 500, 600, 700 while the cast interconnects 500, 600, 700 are heated at a temperature below the melting temperature thereof. The shaping may include one or more processes such as hammering, upsetting, pressing, or the like to form completed interconnects.

FIGS. 8A-8D illustrate a squeeze casting process, according to various embodiments of the present disclosure. Referring to FIG. 8A, the molten metal 802 is disposed in a die 804. The molten metal 802 may be an interconnect material comprising a metal alloy and optionally a ceramic reinforcement material as described above. In some embodiments, the molten metal may be the composite interconnect material formed by stir casting. As shown in FIG. 8B, a punch 806 is then pressed into the die 804 so as to apply pressure to the molten metal 802. The molten metal 802 is then solidified under pressure in the die 804 to form an interconnect 800, as shown in FIG. 8C. The pressure may be applied immediately after the molten metal 802 starts to solidify and is maintained until the interconnect 800 has solidified. The punch 806 is then lifted from the interconnect 800. The interconnect 800 may then be ejected from the die 802 using ejector pins 808, as shown in FIG. 8D. In some embodiments, the interconnect 800 may be further processed. For example, the interconnect 800 may be optionally hot forged for improved dimensional control of surface elements, such as ribs and channels.

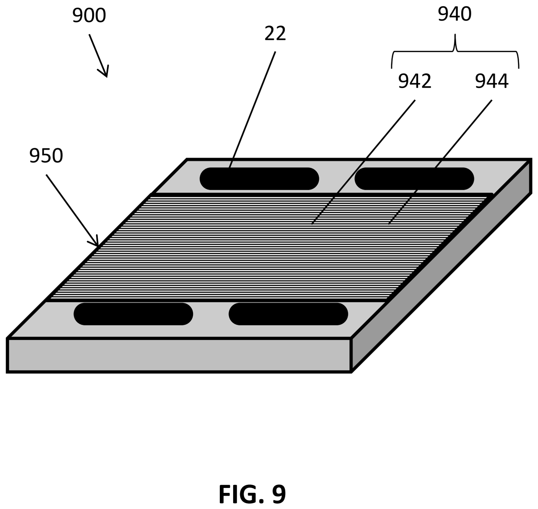

FIG. 9 is a perspective view of an interconnect 900 formed using the casting and hot forging processes of FIGS. 5A-7, or the squeeze casting process of FIGS. 8A-8D. Referring to FIG. 9, the interconnect 900 may be a counter flow interconnect, a co-flow interconnect, or a cross-flow interconnect as described above. After the casting and/or forging, the interconnect 900 may be sand or grit blasted to remove any mold material and/or a native oxide, and to prepare one or more surfaces of the interconnect 900 for further processing.

In some embodiments, the air side of the interconnect 900 may be coated with an electrically conductive protective layer 950. In particular, the protective layer 950 may be formed on at least an air flow field 940 comprising air side ribs 942 and channels 944 of the interconnect 900, to protect the air field 940 from corrosion and/or oxidation due to exposure to high temperatures and oxygen during use in a solid oxide electrochemical cell stack. The protective layer 950 may be deposited by an atmospheric plasma spray (APS) process or a physical vapor deposition process. In some embodiments, the protective layer 950 may comprise a lanthanum strontium manganate and/or manganese cobalt spinel material. In various embodiments, solid oxide electrochemical cells may be assembled between the interconnects 900 to form an electrochemical cell stack or column.

While solid oxide electrochemical cell interconnects, end plates, and electrolytes are described above in various embodiments, embodiments can include any other fuel cell or electrolyzer interconnects or end plates, such as molten carbonate, phosphoric acid or PEM fuel cell or electrolyzer electrolytes, interconnects or end plates.

Fuel cell and electrolyzer systems of the embodiments of the present disclosure are designed to reduce greenhouse gas emissions and have a positive impact on the climate.

The preceding description of the disclosed aspects is provided to enable any person skilled in the art to make or use the present invention. Various modifications to these aspects will be readily apparent to those skilled in the art, and the generic principles defined herein may be applied to other aspects without departing from the scope of the invention. Thus, the present invention is not intended to be limited to the aspects shown herein but is to be accorded the widest scope consistent with the principles and novel features disclosed herein.

## Claims

1. An electrochemical cell column, comprising:
stainless steel interconnects of stacked over one another; and
anode supported solid oxide electrochemical cells located between the interconnects,
wherein a coefficient of thermal expansion (CTE) of the anode supported solid oxide electrochemical cells is within +/- 5% of the CTE of the stainless steel interconnects.

2. The electrochemical cell column of claim 1, wherein:
the anode supported solid oxide electrochemical cells comprise anode supported solid oxide fuel cells or solid oxide electrolyzer cells having the CTE ranging from 10 to 12 ppm/°C; and
the CTE of the stainless steel interconnects ranges from 10 to 12 ppm/°C.

3. The electrochemical cell column of claim 1, wherein the stainless steel interconnects comprise, in weight percent, 0.01-1.2% C, 16-27% Cr, 0-1.5% Mn, 0-1% Si, 0 to less than 1% of at least one of Ni, Mo, Co, Ti or Nb, less than 0.05% each of P and S, and a balance of Fe.

4. The electrochemical cell column of claim 1, wherein each of the stainless steel interconnects comprises:
an air side and an opposing fuel side;
a fuel flow field located on the fuel side and comprising fuel channels separated by fuel ribs; and
an air flow field located on the air side and comprising air channels separated by air ribs.

5. An interconnect for an electrochemical cell column, comprising:
an air side and an opposing fuel side;
a fuel flow field located on the fuel side and comprising fuel channels separated by fuel ribs; and
an air flow field located on the air side and comprising air channels separated by air ribs,
wherein the interconnect comprises a metal matrix composite material.

6. The interconnect of claim 5, wherein:
the metal matrix composite material comprises, in volume percent 55% to 85% of a metal matrix material which comprises steel or cast iron; and 15% to 45% of ceramic dispersed phase material dispersed in the metal matrix material;
the metal matrix material comprises a stainless steel, and the ceramic dispersed phase material comprises alumina or a carbide selected from tungsten carbide, tungsten carbide including a nickel or a cobalt binder, titanium carbide, or titanium carbide including a nickel binder.

7. The interconnect of claim 6, wherein the interconnect comprises:
65-85 volume percent (vol%) of the metal matrix material which comprises stainless steel SS446; and
15-35 vol% of the ceramic dispersed phase material which comprises alumina.

8. The interconnect of claim 5, further comprising:
fuel holes that extend through the interconnect from the air side to the fuel side; and
an electrically conductive protective layer located on the air flow field and comprising at least one of lanthanum strontium manganite or manganese cobalt spinel.

9. An electrochemical cell column, comprising:
interconnects of claim 5 stacked over one another; and
solid oxide electrochemical cells located between the interconnects, wherein a coefficient of thermal expansion (CTE) of the solid oxide electrochemical cells is within +/-5% of the CTE of the interconnects.

10. The electrochemical cell column, of claim 9, wherein:
the solid oxide electrochemical cells comprise electrolyte supported solid oxide fuel cells or solid oxide electrolyzer cells having the CTE ranging from 9.58 to 9.62 ppm/°C; and
the CTE of the interconnects ranges from 9.5 to 9.7 ppm/°C.

11. A method of making an interconnect for an electrochemical cell column, comprising:
casting a metal alloy or a metal matrix composite material to form a near-net-shape interconnect part which includes riser openings, a fuel flow field and an air flow field; and
forging the near-net-shape interconnect part to form the interconnect.

12. The method of claim 11, wherein:
the step of casting the metal alloy or the metal matrix composite material comprises casting a stainless steel;
the interconnect comprises a stainless steel interconnect; and
the stainless steel comprises, in weight percent, 0.01-1.2% C, 16-27% Cr, 0-1.5% Mn, 0-1% Si, 0 to less than 1% of at least one of Ni, Mo, Co, Ti or Nb, less than 0.05% each of P and S, and a balance of Fe.

13. The method of claim 12, further comprising placing the stainless steel interconnect into a solid oxide electrochemical stack comprising anode supported solid oxide electrochemical cells.

14. The method of claim 13, wherein:
the forging comprises hot forging;
the anode supported solid oxide electrochemical cells comprise anode supported solid oxide fuel cells or solid oxide electrolyzer cells having a coefficient of thermal expansion (CTE) ranging from 10 to 12 ppm/°C; and
the CTE of the stainless steel interconnects ranges from 10 to 12 ppm/°C.

15. The method of claim 11, wherein the step of casting the metal alloy or the metal matrix composite material comprises casting the metal matrix composite material which comprises, in volume percent:
55% to 85% of a metal matrix material which comprises a steel or a cast iron; and
15% to 45% of ceramic dispersed phase material dispersed in the metal matrix material;
further comprising placing the metal matrix composite interconnect into a solid oxide electrochemical stack comprising electrolyte supported solid oxide electrochemical cells, wherein:
the electrolyte supported solid oxide electrochemical cells comprise electrolyte supported solid oxide fuel cells or solid oxide electrolyzer cells having a coefficient of thermal expansion (CTE) ranging from 9.58 to 9.62 ppm/°C; and
the CTE of the interconnects ranges from 9.5 to 9.7 ppm/°C.
